# EUROPEAN PATENT SPECIFICATION

(11) **EP 3 663 341 B1**
(45) Date of publication and mention of the grant of the patent: **22.12.2021**
(21) Application number: 18841806.5
(22) Date of filing: 01.08.2018
(51) Int. Cl.: C08J 9/16, C08J 9/12

(54) **URETHANE-BASED THERMOPLASTIC ELASTOMER FOAMED PARTICLES**
URETHANBASIERTE GESCHÄUMTE THERMOPLASTISCHE ELASTOMERTEILCHEN
PARTICULES EXPANSÉES D'ÉLASTOMÈRE THERMOPLASTIQUE OLÉFINIQUE

(30) Priority: 03.08.2017 JP 2017150753
(43) Date of publication of application: 10.06.2020
(73) Proprietor: JSP Corporation, Chiyoda-ku, Tokyo 100-0005 (JP)
(72) Inventor: HAYASHI, Tatsuya, Yokkaichi-shi Mie 510-0881 (JP); KOSHITA, Nobumasa, Yokkaichi-shi Mie 510-0881 (JP); OIKAWA, Masaharu, Yokkaichi-shi Mie 510-0881 (JP)
(74) Representative: Gille Hrabal Partnerschaftsgesellschaft mbB Patentanwälte
(86) International application number: PCT/JP2018/028829
(87) International publication number: WO 2019/026950

(56) References cited:
- EP-A1- 3 109 280
- WO-A1-2016/194737
- JP-A- 2004 359 781
- JP-A- 2006 504 843
- JP-A- 2015 525 822
- JP-B1- 6 338 809
- US-A1- 2016 297 943
- SATOSHI, YAMASAKI et al.: "High performance polyurethane elastomers using new cyclaliphatic diisocyanate", Journal of the Society of Rheology, Japan , THE SOCIETY OF RHEOLOGY, JAPAN, vol. 45, no. 5, December 2017 (2017-12), pages 261-268, XP055571809,

## Description

### TITLE OF INVENTION

### URETHANE-BASED THERMOPLASTIC ELASTOMER FOAMED PARTICLES

### TECHNICAL FIELD

The present invention relates to expanded thermoplastic urethane-based elastomer beads.

### BACKGROUND ART

A thermoplastic urethane-based elastomer is a polymer compound exhibiting characteristics close to those of vulcanized rubbers and is excellent in wear resistance, cold resistance, rebound resilience, and so on. The "thermoplastic urethane-based elastomer" is hereunder occasionally abbreviated as "TPU". The thermoplastic urethane-based elastomer also has high mechanical strength, and therefore, it is positioned as an engineering elastomer and used for a variety of applications, such as cushioning materials, vibration-damping materials, sports goods, and automobile members. By expanding TPU, it is possible to contemplate lightness in weight and softening, while keeping excellent characteristics which TPU has, such as wear resistance and rebound resilience, and hence, in an expanded TPU molded article, application development of sports goods, automobile members, and so on is expected in the future. Such an expanded molded article is, for example, produced by so-called in-mold molding in which a mold are filled with the expanded TPU beads, the expanded beads are heated in the mold by using a heating medium, such as steam, and the expanded beads are secondarily expanded and also mutually fusion-bonded with each other, as described in PTLs 1 ― 3.

### CITATION LIST

### PATENT DOCUMENT

PTL 1: JP 8-113664 A
PTL 2: US 2010/0222442 A
PTL3: EP 3 109 280 A1

### SUMMARY OF INVENTION

### TECHNICAL PROBLEM

In the conventional expanded TPU beads, a molding temperature range where a good expanded beads molded article can be produced was narrow, as compared with general expanded thermoplastic resin beads, such as expanded polypropylene resin beads. For that reason, when an expanded beads molded article has a complicated shape, or when it has a thick thickness, heating of the expanded beads is insufficient depending upon a site of the molded article, and volume expansion owing to secondary expansion of the expanded beads at the time of in-mold molding becomes insufficient, so that there was a case where the surface of the molded article does not become smooth. In addition, in such a case, the expanded beads were locally excessively heated, so that immediately after demolding the molded article from the mold, molding failures, such as generation of excessive deformation and occurrence of shrinkage, were occasionally caused in the molded article.

An object of the present invention is to solve the foregoing problem by providing expanded thermoplastic urethane-based elastomer beads having a wide molding temperature range and excellent in-mold moldability.

### SOLUTION TO PROBLEM

<1> Expanded thermoplastic urethane-based elastomer beads including, as a base material, a thermoplastic urethane-based elastomer having a melting point Tm of 175°C or higher and such a glass transition temperature Tg that a difference (Tm - Tg) between the melting point Tm and the glass transition temperature Tg is 200°C or more.
<2> The expanded thermoplastic urethane-based elastomer beads as set forth in <1>, wherein the thermoplastic urethane-based elastomer has a structure derived from 1,4-bis(isocyanatomethyl)cyclohexane.
<3> The expanded thermoplastic urethane-based elastomer beads as set forth in <1> or <2>, wherein a durometer hardness of the thermoplastic urethane-based elastomer is A85 or more.
<4> The expanded thermoplastic urethane-based elastomer beads as set forth in any one of <1> to <3>, having an apparent density of 10 to 500 kg/m³.
<5> The expanded thermoplastic urethane-based elastomer beads as set forth in <4>, wherein the apparent density is 30 kg/m³ or more and less than 80 kg/m³.

### ADVANTAGEOUS EFFECTS OF INVENTION

In accordance with the present invention, expanded thermoplastic urethane-based elastomer beads having a wide molding temperature range and excellent in-mold moldability can be provided.

### DESCRIPTION OF EMBODIMENTS

### <Expanded Thermoplastic Urethane-based elastomer Beads>

The expanded thermoplastic urethane-based elastomer beads of the present invention include, as a base material, a thermoplastic urethane-based elastomer having a melting point Tm of 175°C or higher and such a glass transition temperature Tg that a difference (Tm - Tg) between the melting point Tm and the glass transition temperature Tg is 200°C or more.

The "expanded thermoplastic urethane-based elastomer beads" are hereunder sometimes referred to as "expanded TPU beads" or simply as "expanded beads".

As mentioned previously, in the conventional expanded beads, a molding temperature range where an expanded beads molded article having excellent smoothness of the surface and suppressed deformation can be produced was narrow.

In the case where an expanded beads molded article has a complicated shape, or in the case where it has a thick thickness, a molding failure was occasionally caused depending upon a site thereof. For example, there was a case where when a site where heating of the expanded beads is locally insufficient owing to a difference in thickness is present at the time of in-mold molding, volume expansion due to secondary expansion of the expanded beads in that site becomes insufficient, so that the surface of the expanded beads molded article does not becomes smooth. In addition, there was a case where when a site where the expanded beads are locally excessively heated is present, immediately after demolding the expanded beads molded article from the mold, excessive shrinkage (so-called terrible sink) is caused.

In contrast, in the case where the expanded TPU beads of the present invention has the aforementioned constitution, the molding temperature range where an expanded beads molded article which is excellent in smoothness of the surface and is suppressed in terrible sink can be produced is wide. Although the reason for this is not always elucidated yet, the following reasons may be conjectured.

In general, TPU is obtained by allowing a polyisocyanate, a high-molecular weight polyol, and a chain extender to react with each other and is a block copolymer in which a hard block formed through formation of physical crosslinking of urethane bonds to each other resulting from the reaction between the polyisocyanate and the chain extender and a soft block containing the high-molecular weight polyol are alternately bonded to each other. TPU exhibits a microphase-separated structure in which the hard segment that is a discontinuous phase (dispersed phase) is dispersed in the soft segment that is a continuous phase. In general, as a cohesive force of the urethane bonds to each other is strong, and a firm physical crosslinking is formed, there is a tendency that a melting point of TPU becomes high, and a glass transition temperature also becomes high. Here, when the microphase separability is developed, the motility of the soft segment becomes high, and even in the case where the melting point of TPU is high, there is a tendency that the glass transition temperature of TPU becomes low.

In general, the thermoplastic elastomer, such as TPU, is elastic, and therefore, there is a tendency that a cell wall is hardly stretched and oriented at the time of expansion. But, in the expanded TPU beads including, as a base material, TPU having a hard segment in which a firm physical crosslinking is formed and having developed microphase separability, as mentioned above, it may be considered that the hard segment is highly stretched and oriented at the time of expansion, whereby a favorable cell wall is formed. As a result, it may be considered that even when the molding temperature at the time of in-mold molding is high, the cell structure is hardly damaged, whereby a favorable expanded beads molded article which is suppressed in terrible sink can be obtained over a wide molding temperature range.

Specifically, the expanded TPU beads of the present invention includes, as a base material, TPU having a melting point Tm of 175°C or higher and a difference (Tm - Tg) between the melting point Tm and the glass transition temperature Tg of 200°C or more.

In expanded TPU beads including, as a base material, TPU having a melting point Tm of lower than 175°C, the physical crosslinking of urethane bonds to each other of the TPU molecule is weak, so that a favorable cell wall is not formed, and the molding temperature range cannot be made wide. The melting point Tm of TPU constituting the expanded TPU beads is preferably 180°C or higher, and more preferably 185°C or higher. Although an upper limit of the melting point Tm is not particularly limited, it is preferably approximately 230°C or lower.

When the difference (Tm - Tg) is less than 200°C, the microphase separability between the hard segment and the soft segment of the TPU molecule is low, and there is a tendency that a favorable cell wall is not formed at the time of expansion, and therefore, the molding temperature range cannot be made wide. In addition, since the hardness of the TPU per se is high, the expanded TPU beads do not exhibit desired rebound resilience.

The difference (Tm - Tg) is preferably 210°C or more, and more preferably 220°C or more. Although an upper limit of the difference (Tm - Tg) is not particularly limited, it is preferably approximately about 290°C.

In the present invention, the melting point Tm of TPU constituting the expanded TPU beads is a value to be measured by the heat flux differential scanning calorimetry without degassing the expanded TPU beads in conformity with JIS K7121-1987.

Specifically, the expanded beads are heated from normal temperature to 260°C at a heating rate of 10°C/min, to obtain a DSC (differential scanning calorimetry) curve. In such a DSC curve, an appearing melting peak temperature is defined as the melting point Tm of TPU that is the base material of the expanded beads. In the case where plural melting peaks appear, a peak temperature of a peak having a largest peak area is defined as the melting point Tm.

The glass transition temperature Tg of TPU constituting the expanded TPU beads is measured by the dynamic mechanical analysis (DMA) without degassing the expanded TPU beads.

Specifically, a cubic test piece having a side of 0.5 to 3 mm is cut out from the expanded bead and compressed and deformed under a condition at an initial load of 1,000 mN, an amplitude width of 10 µm, and a frequency of 1.0 Hz while heating the test piece from -100°C to 0°C at a heating rate of 2°C/min, to obtain a temperature-loss tangent (tanδ) curve. The peak temperature of a peak appearing in the obtained curve is defined as the glass transition temperature Tg of TPU that is the base material of the expanded beads. In the case where plural peaks appear, a peak temperature of a peak having a largest value of peak is defined as the glass transition temperature Tg.

As the test piece of the DSC measurement, 1 to 3 mg of the expanded bead is used. In the case where the weight per expanded bead is less than 1 mg, plural expanded beads may be used for the measurement such that the total weight thereof is 1 to 3 mg. In the case where the weight per expanded bead is 1 to 3 mg, one expanded bead may be used for the measurement as it is. In the case where the weight per expanded bead is more than 3 mg, by equally cutting one expanded bead such that its weight becomes 1 to 3 mg, the one cut sample may be used for the measurement.

### [Other Characteristics of Expanded TPU Beads]

### (Apparent Density)

An apparent density of the expanded TPU beads of the present invention is preferably 10 to 500 kg/m³. In the case where the apparent density of the expanded TPU beads is 10 kg/m³ or more, an expanded beads molded article having a target shape is readily obtained. In the case where the apparent density of the expanded TPU beads is 500 kg/m³ or less, an expanded beads molded article having lightness in weight and high rebound resilience is readily obtained.

From such a reason, the apparent density of the expanded TPU beads is more preferably 20 kg/m³ or more, and still more preferably 30 kg/m³, and it is more preferably 300 kg/m³ or less, still more preferably 150 kg/m³ or less, and especially preferably less than 80 kg/m³.

The apparent density of the expanded beads is a value determined by dividing the weight of the expanded beads by the volume of the expanded beads. The volume of the expanded beads is determined by the water immersion method.

### (Average Bead Diameter)

An average bead diameter of the expanded TPU beads of the present invention is preferably 1 to 10 mm. In the case where the average bead diameter of the expanded PTU beads is 1 mm or more, an expansion ratio can be increased, whereas in the case where it is 10 mm or less, it becomes easy to fill a mold with the expanded beads at the time of molding. From the aforementioned viewpoint, the average bead diameter of the expanded TPU beads is more preferably 1.5 to 8 mm, and still more preferably 2 to 8 mm.

The average bead diameter of the expanded beads means a diameter of a virtual true sphere having the same volume as an average volume per expanded bead. The average volume per expanded bead is determined by the water immersion method.

### (Melt Flow Rate)

A melt flow rate (MFR) at 190°C under a load of 10 kg of the expanded TPU beads of the present invention is preferably 30 g/10 min or less, and more preferably 20 g/10 min or less from the viewpoint of moldability of the expanded beads molded article.

In the present invention, the melt flow rate (MFR) of the expanded beads is a value measured at 190°C under a load of 10 kg on a basis of JIS K7210-2:1014. As a measuring sample, one having a water content of 500 ppm by weight or less is used.

### (Average Value of Cell Diameter)

From the viewpoint of in-mold moldability, an average value of a cell diameter of the expanded TPU beads of the present invention is preferably 100 to 500 µm. The average value of the cell diameter of the expanded TPU beads is more preferably 120 µm or more, and still more preferably 150 µm or more, and it is more preferably 400 µm or less.

The average value of the cell diameter of the expanded TPU beads is a value measured in the following manner in conformity with ASTM D3576-77.

The expanded bead is bisected so as to pass through its center. An enlarged photograph of one cross section of each of the cut expanded beads is taken. In this enlarged photograph, four line segments are drawn at an equal angle so as to pass through the center from the outermost surface of the expanded bead toward the outermost surface on the opposite side. The number of cells crossing each of the line segments is measured, and then, a total length of the four line segments is divided by a total number of cells crossing the line segments, to determine an average chord length of cell, which is further divided by 0.616, thereby determining an average value of the cell diameter of the expanded beads (average cell diameter).

### [Thermoplastic Urethane-based elastomer (TPU)]

The expanded TPU beads of the present invention include, as a base material, the thermoplastic urethane-based elastomer.

TPU that is the base material of the expanded TPU beads is hereunder described.

The characteristics of TPU are influenced by the chemical structure of each of the soft segment and the hard segment. For example, an ester-based TPU in which the soft segment contains a high-molecular weight polyol containing an ester group (e.g., a polyester polyol) is excellent especially in mechanical strength, heat resistance, and so on. In addition, for example, an ether-based TPU in which the soft segment contains a high-molecular weight polyol containing an ether group (e.g., a polyether polyol) is excellent especially in cold resistance, hydrolysis resistance, fungus resistance, and so on. A number average molecular weight of the high-molecular weight polyol is preferably 400 or more.

In order to obtain the expanded beads including, as a base material, TPU exhibiting the aforementioned relation between the melting point Tm and the glass transition temperature Tg, it is preferred that TPU constituting the expanded beads has a structure derived from an alicyclic diisocyanate.

Examples of the alicyclic diisocyanate include 1,4-bis(isocyanatomethyl)cyclohexane, isophorone diisocyanate, 1,3-bis(isocyanatomethyl)cyclohexane, dicyclohexylmethane diisocyanate, 1,3- or 1,4-cyclohexane diisocyanate, 1,3- or 1,4-bis(isocyanatoethyl)cyclohexane, methylcyclohexane diisocyanate, 2,2'-dimethylcyclohexylmethane diisocyanate, and a dimer acid diisocyanate.

Of the foregoing alicyclic diisocyanates, a compound having a cyclohexane ring is preferred, and 1,4-bis(isocyanatomethyl)cyclohexane is more preferred.

As the chain extender, a low-molecular weight polyol is exemplified, and a low-molecular weight diol is preferred. Examples of the low-molecular weight diol include ethylene glycol, 1,3-propylene glycol, 1,2-propylene glycol, 1,3-butanediol, 1,4-butanediol, 1,5-pentanediol, 1,6-hexanediol, 3-methyl-1,5-pentanediol, neopentyl glycol, 1,8-octanediol, 1,9-nonanediol, diethylene glycol, and 1,4-cyclohexanedimethanol. A number average molecular weight of the low-molecular weight polyol is preferably 60 or more and less than 400.

The soft segment is not particularly limited and is appropriately selected according to the physical properties required for the resulting expanded TPU beads molded article.

Although TPU may be any of the aforementioned ether-based TPU and ester-based TPU, the ether-based TPU is preferred from the standpoint that it is high in hydrolysis resistance and small in temperature dependence of mechanical physical properties in a low-temperature region.

A durometer hardness of TPU constituting the expanded TPU beads is preferably A85 or more. In the case where TPU having a durometer hardness of A85 or more is used, in particular, remarkable shrinkage (terrible sink) of the expanded beads molded article after demolding the expanded beads molded article from the mold is readily suppressed. From such a viewpoint, the durometer hardness of TPU is more preferably A88 or more.

The durometer hardness of TPU is preferably less than A100. In the case where the durometer hardness of TPU is less than A100, even if the molding temperature at the time of in-mold molding is not excessively increased, a favorable molded article can be obtained.

The durometer hardness means a durometer hardness measured with a type A durometer on a basis of JIS K6253-3:2012. On measuring the durometer hardness of TPU constituting the expanded beads, a sheet having a thickness of 6 mm is prepared by heat pressing a large number of expanded beads to completely remove the cells, and the thus prepared sheet is used as a test piece.

Although the expanded beads of the present invention include, as a base material, TPU, other polymer, such as a polyolefin-based resin, a polystyrene-based resin, and a styrene-based elastomer can be mixed in TPU and used according to an application and a purpose of the expanded beads molded article, so far as the object of the present invention is not impaired. The use amount of such other polymer is preferably 10 parts by weight or less, and more preferably 5 parts by weight or less based on 100 parts by weight of TPU. It is especially preferred that the expanded TPU beads do not contain other polymer than TPU.

### <Production Method of Expanded TPU Beads>

A method for producing the expanded TPU beads of the present invention is not particularly limited.

For example, the expanded TPU beads of the present invention can be obtained by dispersing the TPU particles in a dispersing medium within a closed vessel and impregnating a blowing agent in the TPU particles under heating; and then releasing the TPU particles having the blowing agent impregnated therein from the closed vessel together with the dispersing medium in an atmosphere of a pressure lower than the pressure within the closed vessel under a temperature condition suitable for expansion, to undergo expansion.

Such a production method of expanded beads is a method called a dispersing medium release method.

The production method of the TPU particles is not particularly limited, and the TPU particles can be obtained by a known method. For example, the TPU particles can be obtained by a strand-cut method in which the raw material TPU is fed into an extruder and melted, a TPU melt is extruded in a strand-like form from small holes of a die annexed in a tip of the extruder, and the extrudate is cut in a predetermined weight; an underwater cutting method (UWC method) in which a TPU melt is extruded from small holes into water, and immediately thereafter, the extrudate is cut in water; a hot-cut method in which a TPU melt is extruded from small holes, and immediately thereafter, the extrudate is cut in a gas phase; and the like.

The weight of the TPU particles can be regulated by regulating the diameter of small holes, the extrusion amount, and cutting speed.

MFR at 190°C under a load of 10 kg of the raw material TPU to be fed into an extruder is preferably 1 to 30 g/10 min, and more preferably 2 to 20 g/10 min.

From the viewpoint of suppressing decomposition of TPU at the time of extrusion, a temperature of the TPU melt within the extruder is preferably 160 to 220°C, and more preferably 170 to 200°C. In addition, similarly, a residence time (pass time) of TPU within the extruder is preferably 60 to 300 seconds, and more preferably 120 to 240 seconds.

Although an average weight per TPU particle is appropriately set according to the size, expansion ratio, etc. of the target expanded TPU beads, it is preferably 0.5 to 30 mg. When the average weight falls within the aforementioned range, the expansion ratio can be increased, and a lowering of internal fusion bonding properties of the expanded beads molded article can be suppressed. From such a viewpoint, a lower limit of the average weight per TPU particle is more preferably 1 mg, and still more preferably 3 mg. Meanwhile, the upper limit thereof is more preferably 20 mg, still more preferably 15 mg, and especially preferably 12 mg.

The TPU particles can be appropriately blended with additives which are usually used, such as an antistatic agent, an electrical conductivity imparting agent, a lubricant, an antioxidant, a UV absorbing agent, a flame retardant, a metal-deactivator, a crystal nucleus agent, a filler, and a color pigment, as the need arises. By feeding such an additive into an extruder together with the raw material TPU and kneading them, the additive can be blended in the TPU particles.

Although the addition amount of the additive varies with an application and a purpose of the expanded beads molded article, it is preferably 10 parts by weight or less, and more preferably 5 parts by weight or less based on 100 parts by weight of the raw material TPU.

The production method of the expanded TPU beads is hereunder described while referring to the dispersing medium release method as an example.

The TPU particles are dispersed in a dispersing medium (typically water) within a heatable and pressurizable closed vessel, such as an autoclave.

In the dispersing medium, it is preferred to add a dispersant, such as a sparingly water-soluble inorganic material, e.g., aluminum oxide, tricalcium phosphate, magnesium pyrophosphate, zinc oxide, kaolin, mica, and talc, and a dispersing aid, such as an anionic surfactant, e.g., sodium dodecylbenzenesulfonate and a sodium alkanesulfonate, as the need arises. A weight ratio of the TPU particles to the dispersant ((resin particles)/(dispersant)) is preferably 20 to 2,000, and more preferably 30 to 1,000. In addition, a weight ratio of the dispersant to the dispersing aid ((dispersant)/(dispersing aid)) is preferably 1 to 500, and more preferably 1 to 100.

Subsequently, a blowing agent is impregnated in the TPU particles within the closed vessel.

Although the blowing agent is not particularly limited, a physical blowing agent can be used. Examples of the physical blowing agent include organic physical blowing agents, such as an aliphatic hydrocarbon, e.g., propane, butane, pentane, hexane, and heptane, an alicyclic hydrocarbon, e.g., cyclopentane and cyclohexane, and a halogenated hydrocarbon, e.g., chlorofluoromethane, trifluoromethane, 1,1-difluoroethane, 1,1,1,2-tetrafluoroethane, methyl chloride, ethyl chloride, and methylene chloride, and a dialkyl ether, e.g., dimethyl ether, diethyl ether, and methyl ethyl ether; and inorganic physical blowing agents, such as carbon dioxide, nitrogen, argon, air, and water.

Although a blending amount of the blowing agent is appropriately set taking the apparent density of the target expanded beads, the kind of TPU, the kind of the blowing agent, and so on, into consideration, typically, it is preferably 0.5 to 30 parts by weight based on 100 parts by weight of the TPU particles.

From the viewpoint of sufficiently impregnating the blowing agent in the TPU particles within a short time, it is preferred to undergo the impregnation of the physical blowing agent in the TPU particles under heating and pressure.

For example, when the melting point of the raw material TPU is defined as Tm₀, a temperature of the contents within the closed vessel on the occasion of impregnating the blowing agent in the TPU particles (impregnation temperature) is preferably (Tmo - 45)°C or higher. For example, in the case where Tm₀ is 185°C, it is preferred to control the impregnation temperature to 140°C or higher.

The melting point Tm₀ of the raw material TPU is a value to be measured by the heat flux differential scanning calorimetry in conformity with JIS K7121-1987. Specifically, the raw material TPU is heated and cooled according to a program in which the temperature is raised (first temperature rise) from normal temperature to 260°C at a heating rate of 10°C/min; then, the temperature is dropped to 30°C at a cooling rate of 10°C/min; and the temperature is again raised (second temperature rise) to 260°C at a heating rate of 10°C/min, thereby obtaining a DSC curve. In such a DSC curve, a melting peak temperature appearing at the time of second temperature rise is defined as the melting point Tmo of the raw material TPU.

It is preferred to add the physical blowing agent within the closed vessel such that a pressure within the closed vessel on the occasion of impregnating the blowing agent in the TPU particles (impregnation pressure) is 0.5 MPa(G) or more. That is, the impregnation pressure is preferably 0.5 MPa(G) or more, and more preferably 1.0 MPa(G) or more. From the viewpoint of pressure resistance of the closed vessel, the impregnation pressure is preferably 10 MPa(G) or less, and more preferably 8.0 MPa(G) or less.

The "0.5 MPa(G)" means 0.5 MPa in terms of a gauge pressure.

Although the time of impregnating the blowing agent in the TPU particles (impregnation time) is appropriately set according to the impregnation temperature, the impregnation pressure, the kind and weight of TPU, and so on, from the viewpoint of sufficiently impregnating the physical blowing agent in the TPU particles, it is preferably 0.05 hour or more, and more preferably 0.1 hour or more. Meanwhile, from the viewpoint of productivity, the impregnation time is preferably 3 hours or less, and more preferably 1 hour or less.

In the foregoing way, the blowing agent is impregnated in the TPU particles, whereby the TPU particles having the blowing agent impregnated therein (hereinafter sometimes referred to "expandable particles") are formed.

Then, the expanded TPU beads can be obtained by releasing the expandable particles together with the dispersing medium from the closed vessel in an atmosphere of a pressure lower than the pressure within the closed vessel (typically in atmospheric pressure), to expand the expandable particles.

When the melting point of the raw material TPU is defined as Tmo, a temperature of the contents (expansion temperature) within the closed vessel on the occasion of releasing the expandable particles together with the dispersing medium from the closed vessel in an atmosphere of a pressure lower than the pressure within the closed vessel is preferably (Tm₀ - 45)°C or higher, more preferably (Tm₀ - 45)°C to (Tm₀ - 20)°C, and still more preferably (Tmo - 40)°C to (Tmo - 28)°C.

By expanding the expandable particles within such a temperature range, expanded beads that are excellent especially in in-mold moldability can be readily obtained.

On the occasion of releasing the expandable particles together with the dispersing medium from the closed vessel in an atmosphere of a pressure lower than the pressure within the closed vessel, in order to minimize variation in the apparent density and cell diameter of the resulting expanded beads, it is preferred to keep the pressure within the opened vessel at a fixed level or to increase it step-by-step by applying a back pressure with a gas, such as carbon dioxide and air.

In general, when the TPU particles having the blowing agent impregnated therein are expanded in the aforementioned range of apparent density, the cells of the resulting expanded beads are liable to become fine. By adopting a production condition as mentioned later, specifically, by regulating the kind and blending amount of a cell controlling agent, the kind and impregnation pressure (impregnation amount) of the blowing agent, or the expansion temperature, even if the apparent density falls within the aforementioned range, it becomes possible to suppress excessive refinement of cells. The expansion condition is hereunder described.

A blending amount of the cell controlling agent in the TPU particles is preferably 0.2 parts by weight or less, and more preferably 0.1 part by weight or less based on 100 parts by weight of TPU. From the viewpoint of suppressing the matter that the cell diameter of the resulting expanded beads becomes non-uniform, the blending amount of the cell controlling agent is preferably 0.005 parts by weight or more, and more preferably 0.01 part by weight or more based on 100 parts by weight of TPU.

In the case of using water as the dispersing medium, from the viewpoint of suppressing variation in cell diameter of the expanded beads, as the cell controlling agent, it is preferred to use an inorganic powder having relatively low water absorption properties, such as talc and calcium carbonate, and it is more preferred to use talc. In the case of using talc as the cell controlling agent, a 50% volume average particle diameter (d50) of talc is preferably 0.5 to 30 µm, and more preferably 1 to 15 µm.

In order to suppress refinement of the cells of the expanded TPU beads, carbon dioxide is preferably used as the blowing agent. In addition, in the production equipment, by using carbon dioxide as the blowing agent, an explosion-proof countermeasure as in a conventional case of using an inflammable hydrocarbon, such as butane, is not required. In consequence, it is easy to secure safety, and the equipment investment costs can be reduced.

Although it is preferred to use carbon dioxide as the blowing agent, other physical blowing agent and/or chemical blowing agent can also be used in combination with carbon dioxide. In this case, a blending ratio of carbon dioxide in the blowing agent is preferably 50% by weight or more, more preferably 70% by weight or more, and still more preferably 90% by weight or more.

In the case of using carbon dioxide as the blowing agent, from the viewpoint of not excessively refining the cell diameter of the resulting expanded beads, the impregnation pressure is preferably 7.0 MPa(G) or less, more preferably 5.0 MPa(G) or less, and still more preferably 4.0 MPa(G) or less.

The pressure (expansion pressure) within the closed vessel at the time of expansion is preferably less than 5.0 MPa(G), and more preferably 4.0 MPa(G) or less. By allowing the expansion pressure to fall within the aforementioned range, it becomes easy to suppress refinement of the cells of the resulting expanded beads. On the other hand, from the viewpoint of uniformity of the cells of the expanded beads, the expansion pressure is preferably higher than 1.5 MPa(G), and more preferably 2.0 MPa(G) or more.

After the expansion, in the case where the expanded TPU beads are shrunk to cause a reduction of the volume, the expanded beads are pressurized with air, and then, the volume can be recovered in atmospheric pressure. Specifically, it is preferred that the resulting expanded beads are charged in a closed vessel and pressurized with compressed air of 0.05 to 0.6 MPa(G) at a temperature of 0 to 60°C for 1 to 24 hours, the pressure is then released, followed by standing in atmospheric pressure of 30 to 80°C for 12 to 72 hours. According to this operation, the volume of the shrunk expanded beads can be recovered.

### <Expanded Beads Molded Article>

An expanded beads molded article is obtained by subjecting the expanded TPU beads of the present invention to in-mold molding. A method of in-mold molding is not particularly limited, and a known method may be adopted. In general, though steam is used as a heating medium at the time of in-mold molding, heated air or the like can also be used. In addition, the expanded TPU beads can be heated by a microwave, a radio wave, or the like. In this case, it is preferred to heat the expanded TPU beads in the presence of water.

The expanded TPU beads of the present invention have a wide moldable temperature range. For that reason, by performing in-mold molding using the expanded TPU beads of the present invention, even in the case of producing a molded article having a thick thickness, or in the case of producing a molded article having a complicated shape, an expanded beads molded article which is excellent in smoothness of the surface and is suppressed in terrible sink can be obtained.

### EXAMPLES

The present invention is hereunder described in detail by reference to Examples, but it should be construed that the present invention is not limited by these Examples.

### <Examples 1 to 5 and Comparative Examples 1 to 4>

### [Production of TPU Particles]

TPU (raw material TPU) shown in Table 1 and a cell controlling agent were fed into a twin-screw extruder having an inside diameter of 26 mm, and these were heat kneaded at 200°C to obtain a TPU melt. The TPU melt was extruded into water from small holes of a die annexed in a tip of the extruder and cut, thereby obtaining TPU particles having an average weight of 10 mg and an aspect ratio ((major axis)/(minor axis)) of 1.0. A pass time was 180 seconds.

Here, the major axis means a longest length of the TPU particles, and the minor axis means of a maximum length in the direction orthogonal to the direction of the major axis direction.

As the cell controlling agent, talc (manufactured by Hayashi Kasei Co., Ltd., a product name: KHP-125B, d50: 7 µm) was used.

Details of the raw material TPU used for production of TPU particles are shown in Table 1.

**Table 1**

| Kind of TPU | Brand | Polyisocyanate | Hardness | Tg₀ | Tm₀ |
|---|---|---|---|---|---|
| | | | | °C | °C |
| E101 | Fortimo^{(R)} XET-T1280 | 1,4-H6XDI | A80 | -53 | 149 |
| E1 | Fortimo^{(R)} XET-T1285 | 1,4-H6XDI | A85 | -51 | 177 |
| E2 | Fortimo^{(R)} XET-T1290 | 1,4-H6XDI | A90 | -48 | 188 |
| E3 | Fortimo^{(R)} XET-T1295 | 1,4-H6XDI | A95 | -40 | 192 |
| E102 | Desmopan^{(R)} 9385AU | MDI | A86 | -18 | 166 |
| E103 | PANDEX^{(R)} T-8190N | MDI | A91 | -7 | 171 |

In Table 1, "1,4-H6XDI" in the "Polyisocyanate" column means that the polyisocyanate-derived structure of TPU is a structure derived from 1,4-bis(isocyanatomethyl)cyclohexane. "MDI" in the same column means that the polyisocyanate-derived structure of TPU is a structure derived from 4,4'-diphenylmethane diisocyanate.

In Table 1, E101 and E1 to E3 are TPU, manufactured by Mitsui Chemicals, Inc.; E102 is TPU, manufactured by DIC Covestro Polymer Ltd.; and E103 is TPU, manufactured by DIC Corporation.

The melting point (Tmo), glass transition temperature (Tgo), and hardness (durometer hardness) of the raw material TPU were measured by the following methods.

### 1. Melting Point (Tmo)

A melting peak temperature of the raw material TPU was measured in conformity with JIS K7121-1987. Specifically, the melting point Tmo of the raw material TPU was determined as a peak top temperature of the melting peak of a DSC curve obtained in a manner in which using about 5 mg of the raw material TPU in a pellet-like form as a test piece, the temperature was raised (first temperature rise) from normal temperature to 260°C at a heating rate of 10°C/min under a condition at a nitrogen flow rate of 30 mL/min; then, the temperature was dropped to 30°C at a cooling rate of 10°C/min; and the temperature was again raised (second temperature rise) to 260°C at a heating rate of 10°C/min, on a basis of the heat flux differential scanning calorimetry. As the measuring device, a heat flux differential scanning calorimetric analyzer (manufactured by SII Technology Inc., model number: DSC7020) was used.

### 2. Glass Transition Temperature (Tgo)

Using a dynamic viscoelasticity measuring device DMA7100 (manufactured by Hitachi High-Tech Science Corporation), the glass transition temperature (Tg₀) of the raw material TPU was measured. The raw material TPU was heat pressed at 200°C to prepare a sheet having a thickness of 1 mm, and a measuring sample of a rectangular parallelepiped of 40 mm × 5 mm × 1 mm (sheet thickness) was cut out from the prepared sheet. The sample was deformed by means of drawing under a condition at an initial load of 1,000 mN, an amplitude width of 10 µm, and a frequency of 1.0 Hz while heating the sample from -100°C to 0°C at a heating rate of 2°C/min, to obtain a temperature-loss tangent (tanδ) curve. The peak temperature of a peak appearing in the obtained curve was defined as the glass transition temperature Tgo of the raw material TPU.

### 3. Durometer Hardness

The durometer hardness of the raw material TPU was measured with a type A durometer on a basis of JIS K6253-3:2012. A sheet having a thickness of 6 mm was prepared by heat pressing the raw material TPU at 200°C, and the thus prepared sheet was used as a test piece. A measuring time of 3 seconds was adopted.

### [Preparation of Expanded TPU Beads]

50 kg of the above-obtained TPU particles and 270 liters of water as a dispersing medium were charged in a stirrer-equipped autoclave having a capacity of 400 liters. Furthermore, 0.2 parts by weight of kaolin as a dispersant and 0.008 parts by weight of a sodium alkylbenzenesulfonate as a surfactant based on 100 parts by weight of the TPU particles were added to the dispersing medium.

The temperature was raised to a temperature (impregnation temperature) shown in Table 2 or 3 while stirring the contents within the autoclave, and carbon dioxide as a blowing agent was fed under pressure into the autoclave until reaching a pressure (impregnation pressure) shown in Table 2 or 3, followed by holding at that temperature (impregnation temperature) for 15 minutes while keeping that pressure. Thereafter, while applying a back pressure with carbon dioxide to regulate the pressure within the vessel such that it was constant in terms of a pressure (expansion pressure) shown in Table 2 or 3, the TPU particles having the blowing agent impregnated therein were released together with the dispersing medium from the autoclave in atmospheric pressure at a temperature (expansion temperature) of the contents within the autoclave shown in Table 2 or 3, and the TPU particles were foamed and expanded to obtain expanded beads.

The resulting expanded beads were charged in a closed vessel and pressurized at 30°C with compressed air of 0.3 MPa(G) for 12 hours, and the pressure was then released, followed by standing at 40°C under atmospheric pressure for 48 hours.

### [Characteristics of Expanded Beads]

The apparent density of the resulting expanded beads, the melting point (Tm), glass transition temperature (Tg), and difference (Tm - Tg) of TPU constituting the expanded beads, and the durometer hardness of TPU constituting the expanded beads are shown in Tables 2 and 3.

The measurement methods of the apparent density of the expanded beads, the melting point and glass transition temperature of TPU constituting the expanded beads, and the durometer hardness of TPU are shown below. These measurements were performed after condition adjusting the resulting expanded beads under a condition at a relative humidity of 50% and 23°C and 1 atm, followed by standing for 2 days.

### 1. Apparent Density

A graduated measuring cylinder charged with water at 23°C was prepared, and expanded beads having a weight W1 [g] were sunk using a wire net. Taking the volume of the wire net into account, a volume V1 [L] of the expanded beads, which was read from the water level rise, was measured. Then, the weight W1 [g] of the expanded beads was divided by the volume V1 [L] (W1/V1), and a unit was expressed in terms of [kg/m³], thereby determining the apparent density of the expanded beads.

### 2. Melting Point (Tm)

The melting point Tm of TPU constituting the expanded TPU beads was measured by the heat flux differential scanning calorimetry without degassing the expanded TPU beads in conformity with JIS K7121-1987.

Specifically, the expanded beads were heated by a program of raising the temperature from normal temperature to 260°C at a heating rate of 10°C/min under a condition at a nitrogen flow rate of 30 mL/min without degassing the expanded TPU beads, and in the obtained DSC curve, a melting peak temperature appearing at the time of temperature rise was defined as the melting point Tm of TPU that is the base material of the expanded TPU beads.

### 3. Glass Transition Temperature (Tg)

Using a dynamic viscoelasticity measuring device DMA7100 (manufactured by Hitachi High-Tech Science Corporation), the glass transition temperature (Tg) of TPU constituting the expanded TPU beads was measured without degassing the expanded TPU beads. A cubic test piece having a side of 2 mm was cut out from the expanded bead and compressed and deformed under a condition at an initial load of 1,000 mN, an amplitude width of 10 µm, and a frequency of 1.0 Hz while heating the test piece from - 100°C to 0°C at a heating rate of 2°C/min, to obtain a temperature-loss tangent (tanδ) curve. The peak temperature of a peak appearing in the obtained curve was defined as the glass transition temperature Tg of TPU that is the base material of the expanded TPU beads.

### 4. Durometer Hardness

The durometer hardness of TPU constituting the expanded beads was measured with a type A durometer on a basis of JIS K6253-3:2012. A sheet having a thickness of 6 mm was prepared by heat pressing a large number of the expanded TPU beads at 200°C and then degassing the cells, and the thus prepared sheet was used as a test piece. A measuring time of 3 seconds was adopted.

### [Preparation of Expanded Beads Molded Article]

A mold cavity of 200 mm in length × 250 mm in width × 20 mm in thickness was filled with the expanded beads as prepared above; steam was fed into the cavity until reaching a molding pressure shown in Table 2 or 3, and the expanded beads were heated; the expanded beads were subjected to secondary expansion and also mutually fuse bonded with each other; and after cooling, the molded article was taken out from the mold, thereby obtaining an expanded beads molded article in the form of a plank.

An expanded beads molded article for sample used for evaluation of rebound resilience was prepared in the same manner as described above, except for changing the molding pressure to one shown in the "Molding pressure of sample for rebound resilience" section shown in Table 2 or 3.

After condition adjusting the resulting expanded beads molded article under a condition at a relative humidity of 50% and 23°C and 1 atm, followed by standing for 2 days, the following evaluations were performed. The results are shown in Tables 2 and 3.

### [Evaluations of Expanded Beads Molded Article]

### 1. Surface State

The case where a gap between the expanded beads of the surface of the expanded beads molded article was filled was evaluated as "A", and the case where the gap was not filled was evaluated as "B".

### 2. Fusion Bonding

The case where a degree of fusion bonding of the expanded beads molded article was 90% or more was evaluated as "A", and the case where the degree of fusion bonding was less than 90% was evaluated as "B".

The degree of fusion bonding of the expanded beads molded article was measured by the following method. A test piece was cut out in a size of 170 mm in length × 30 mm in width while not changing the thickness. One surface (surface of 170 mm × 30 mm) of this test piece was incised with a cutter knife in a depth of about 10 mm so as to bisect the length of the molded article, and the molded article was bent from the incised part and fractured. A value of a ratio (m/n × 100 [%]) of the number (m) of material-fractured expanded beads existent on the fractured surface to the number (n) of all of expanded beads existent on the fractured surface was calculated and defined as a degree of fusion bonding of material. In the case where even when bending the molded article, the molded article could not be fractured, the degree of fusion bonding was defined as 100%. The aforementioned measurement was performed 5 times using different test pieces, and a degree of fracture of each of the materials was determined. An arithmetic average value thereof was defined as the degree of fusion bonding.

### 3. Terrible Sink

The thickness of each of the center and four corners of the expanded beads molded article was measured. The case where a ratio of the thickness of the center to that of a portion having a thickest thickness of the four corners was 90% or more was evaluated as "A", and the case where the ratio was less than 90% was evaluated as "B".

### 4. Density

A rectangular parallelepiped sample having a dimension of 170 mm × 50 mm × 15 mm excluding a skin at the time of molding was cut out from the expanded beads molded article, and a volume H [m³] of the sample was determined from the outside dimension of the sample. A weight W [kg] of the sample was measured, and a value obtained by dividing the weight W [kg] by the volume H [m³] was defined as a density [kg/m³] of the expanded beads molded article.

### 5. Shrinkage Factor

The shrinkage factor was measured in the following manner.

A maximum dimension L [mm] in the lateral direction of the expanded beads molded article was measured, and the dimension L [mm] was subtracted from 250 mm that is a length of the mold cavity in the lateral direction and further it was divided by 250 mm ((250 - L) × 100/250), thereby determining the shrinkage factor [%] of the expanded beads molded article.

### 6. Rebound Resilience

The rebound resilience of the expanded beads molded article was measured with a Schob type rebound tester, RT-90 (manufactured by Kobunshi Keiki Co., Ltd.) under a condition at a relative humidity of 50% and 23°C in conformity with JIS K 6255:2013. A sample (with a molded skin on one face side) of 30 mm in length × 30 mm in width × 12.5 mm in thickness was cut out from the center of the expanded beads molded article. This sample was fixed with a pressure sensitive adhesive double coated tape such that the skin surface of the sample came into contact with a tip of a pendulum, and the pendulum having a hammer diameter φ of 15 mm and an arm weight of 0.25 kg was swung down from a position at an angle of fall of 90±1°. Then, the pendulum was allowed to come into contact with the skin surface of the sample from the thickness direction, and a rebounding height h (mm) of the pendulum was measured. The rebounding height (h) was divided by a drop height H (mm) of the pendulum, and an arithmetic average value of N = 5 was defined as the rebound resilience.

In Comparative Example 4, the expanded beads molded article was not excellent in the evaluations of the surface state and the fusion bonding, and hence, the measurement for rebound resilience was not performed.

**Table 2**

| | | | Example 1 | | Example 2 | | Example 3 | | Example 4 | | Example 5 | |
|---|---|---|---|---|---|---|---|---|---|---|---|---|
| TPU | Kind | - | E2 | | E2 | | E3 | | E3 | | E1 | |
| Production condition | Impregnation temperature | °C | 154 | | 152 | | 166 | | 164 | | | |
| | Impregnation pressure | MPa(G) | 2.0 | | 4.0 | | 2.0 | | 4.0 | | 132 4.0 | |
| | Expansion temperature | °C | 154 | | 152 | | 166 | | 164 | | 132 | |
| | Expansion pressure | MPa(G) | 2.0 | | 4.0 | | 2.0 | | 4.0 | | 4.0 | |
| Expanded beads | Apparent density | kg/m³ | 113 | | 53 | | 101 | | 45 | | 76 | |
| | Melting point Tm | °C | 196 | | 196 | | 211 | | 210 | | 177 | |
| | Glass transition temperature Tg | °C | -50 | | -51 | | -46 | | -47 | | -51 | |
| | Difference (Tm - Tg) | °C | 246 | | 247 | | 257 | | 257 | | 228 | |
| | Durometer hardness of TPU | - | A90 | | A90 | | A95 | | A95 | | A85 | |
| Molded article | Molding pressure | MPa(G) | 0.200 | 0.300 | 0.100 | 0.300 | 0.300 | 0.400 | 0.300 | 0.400 | 0.250 | 0.325 |
| | Surface state | - | A | A | A | A | A | A | A | A | A | A |
| | Fusion bonding | - | A | A | A | A | A | A | A | A | A | A |
| | Terrible Sink | - | A | A | A | A | A | A | A | A | A | A |
| | Density | kg/m³ | 198 | 199 | 96 | 101 | 188 | 187 | 94 | 94 | 172 | 167 |
| | Shrinkage factor | % | 3.0 | 3.0 | 3.0 | 3.3 | 2.4 | 2.6 | 3.4 | 3.2 | 4.3 | 4.8 |
| | Molding pressure of sample for rebound resilience | MPa(G) | 0.300 | | 0.250 | | 0.400 | | 0.400 | | 0.300 | |
| | Rebound resilience | % | 74.0 | | 77.6 | | 67.4 | | 74.0 | | 77.2 | |

**Table 3**

| | | | Comparative Example 1 | | | Comparative Example 2 | | | Comparative Example 3 | | | Comparative Example 4 | |
|---|---|---|---|---|---|---|---|---|---|---|---|---|---|
| TPU | Kind | - | E102 | | | E103 | | | E103 | | | E101 | |
| Production condition | Impregnation temperature | °C | 131 | | | 142 | | | 144 | | | 100 | |
| | Impregnation pressure | MPa(G) | 3.8 | | | 4.0 | | | 4.0 | | | 4.0 | |
| | Expansion temperature | °C | 131 | | | 142 | | | 144 | | | 100 | |
| | Expansion pressure | MPa(G) | 3.8 | | | 4.0 | | | 4.0 | | | 4.0 | |
| Expanded beads | Apparent density | kg/m³ | 121 | | | 112 | | | 97 | | | 195 | |
| | Melting point Tm | °C | 166 | | | 177 | | | 180 | | | 129 | |
| | Glass transition temperature Tg | °C | -20 | | | -16 | | | -15 | | | -51 | |
| | Difference (Tm - Tg) | °C | 186 | | | 193 | | | 195 | | | 180 | |
| | Durometer hardness of TPU | - | A86 | | | A91 | | | A91 | | | A80 | |
| Molded article | Molding pressure | MPa(G) | 0.225 | 0.250 | 0.275 | 0.250 | 0.275 | 0.300 | 0.275 | 0.300 | 0.325 | 0.150 | 0.175 |
| | Surface state | - | B | A | A | B | A | A | B | A | A | B | B |
| | Fusion bonding | - | A | A | A | A | A | A | A | A | A | B | B |
| | Terrible Sink | - | A | A | B | A | A | B | A | A | B | A | B |
| | Density | kg/m³ | 210 | 212 | 208 | 174 | 170 | 164 | 157 | 166 | 163 | 330 | 334 |
| | Shrinkage factor | % | 5.2 | 5.0 | 4.6 | 7.4 | 5.4 | 4.8 | 5.2 | 5.2 | 5.6 | 5.8 | 6.6 |
| | Molding pressure of sample for rebound resilience | MPa(G) | 0.250 | | | 0.275 | | | 0.300 | | | Not evaluated | |
| | Rebound resilience | % | 66.0 | | | 56.8 | | | 58.1 | | | | |

As is noted from the evaluation results shown in Tables 2 and 3, in the Comparative Examples, the range of molding pressure in which the molded article which is favorable in all of the surface state and fusion bonding of the expanded beads molded article and is free from terrible sink was limited to one point of 0.250 MPa(G), 0.275 MPa(G), etc. In contrast, in the Examples, the molded article which is favorable in all of the surface state and fusion bonding of the expanded beads molded article over a range of 0.200 to 0.300 MPa(G) and 0.300 to 0.400 MPa(G), as well as a wider range of 0.100 to 0.300 MPa(G), and which is free from terrible sink was obtained.

## Claims

1. Expanded thermoplastic urethane-based elastomer beads comprising, as a base material, a thermoplastic urethane-based elastomer having a melting point Tm of 175°C or higher and such a glass transition temperature Tg that a difference (Tm - Tg) between the melting point Tm and the glass transition temperature Tg is 200°C or more; Tm and Tg determined using the method of measurement as detailed in the description.

2. The expanded thermoplastic urethane-based elastomer beads according to claim 1, wherein the thermoplastic urethane-based elastomer has a structure derived from 1,4-bis(isocyanatomethyl)cyclohexane.

3. The expanded thermoplastic urethane-based elastomer beads according to claim 1 or 2, wherein a durometer hardness of the thermoplastic urethane-based elastomer is A85 or more.

4. The expanded thermoplastic urethane-based elastomer beads according to any one of claims 1 to 3, having an apparent density of 10 to 500 kg/m³.

5. The expanded thermoplastic urethane-based elastomer beads according to claim 4, wherein the apparent density is 30 kg/m³ or more and less than 80 kg/m³.

## Patentansprüche

1. Expandierte thermoplastische Elastomerkügelchen auf Urethanbasis, die als Basismaterial ein thermoplastisches Elastomer auf Urethanbasis mit einem Schmelzpunkt Tm von 175°C oder höher und einer solchen Glasübergangstemperatur Tg umfassen, dass eine Differenz (Tm - Tg) zwischen dem Schmelzpunkt Tm und der Glasübergangstemperatur Tg 200°C oder mehr beträgt; Tm und Tg werden unter Verwendung des in der Beschreibung angegebenen Messverfahrens bestimmt.

2. Die expandierten thermoplastischen Elastomerkügelchen auf Urethanbasis nach Anspruch 1, wobei das thermoplastische Elastomer auf Urethanbasis eine von 1,4-Bis(isocyanatomethyl)cyclohexan abgeleitete Struktur aufweist.

3. Die expandierten thermoplastischen Elastomerkügelchen auf Urethanbasis nach Anspruch 1 oder 2, wobei eine Durometerhärte des thermoplastischen Elastomers auf Urethanbasis A85 oder mehr beträgt.

4. Die expandierten thermoplastischen Elastomerkügelchen auf Urethanbasis nach einem der Ansprüche 1 bis 3 mit einer Schüttdichte von 10 bis 500 kg/m³.

5. Die expandierten thermoplastischen Elastomerkügelchen auf Urethanbasis nach Anspruch 4, wobei die Schüttdichte 30 kg/m³ oder mehr und weniger als 80 kg/m³ beträgt.

## Revendications

1. Des perles expansées d'élastomère thermoplastique à base d'uréthane comprenant, comme matériau de base, un élastomère thermoplastique à base d'uréthane ayant un point de fusion Tm de 175°C ou plus et une température de transition vitreuse Tg telle qu'une différence (Tm - Tg) entre le point de fusion Tm et la température de transition vitreuse Tg est de 200°C ou plus ; Tm et Tg étant déterminées en utilisant la méthode de mesure donnée dans la description.

2. Perles expansées en élastomère thermoplastique à base d'uréthane selon la revendication 1, dans lesquelles l'élastomère thermoplastique à base d'uréthane a une structure dérivée du 1,4-bis(isocyanatométhyl)cyclohexane.

3. Perles expansées en élastomère thermoplastique à base d'uréthane de la revendication 1 ou 2, dans lesquelles la dureté au duromètre de l'élastomère thermoplastique à base d'uréthane est de A85 ou plus.

4. Perles expansées en élastomère thermoplastique à base d'uréthane selon l'une quelconque des revendications 1 à 3, ayant une densité apparente de 10 à 500 kg/m³.

5. Perles expansées d'élastomère thermoplastique à base d'uréthane de la revendication 4, dans lesquelles la densité apparente est de 30 kg/m³ ou plus et inférieure à 80 kg/m³.
